# FASCICULE DE BREVET EUROPEEN

(11) **EP 2 018 294 B1**
(45) Date de publication et mention de la délivrance du brevet: **23.11.2011**
(21) Numéro de dépôt: 07731923.4
(22) Date de dépôt: 20.04.2007
(51) Int. Cl.: B60N 2/427

(54) **AGENCEMENT DE SIEGE POUR UN VEHICULE AUTOMOBILE COMPORTANT UN SYSTEME D'ANTI SOUS-MARINAGE FORMANT NOTAMMENT PANTOGRAPHE**
SITZANORDNUNG FÜR EIN KRAFTFAHRZEUG MIT EINEM SYSTEM ZUR VERHINDERUNG DES ABTAUCHENS, INSBESONDERE IN FORM EINES STORCHSCHNABELS
SEAT ARRANGMENT FOR A MOTOR VEHICLE COMPRISING AN ANTI-SUBMARINING AND PARTICULAR PANTOGRAPH-SHAPED SYSTEM

(30) Priorité: 19.05.2006 FR 0651846
(43) Date de publication de la demande: 28.01.2009
(73) Titulaire: Renault S.A.S., 92100 Boulogne-Billancourt (FR)
(72) Inventeur: RIOU, Jean-Christophe, F-78640 Villiers-Saint-Frederic (FR)
(86) Numéro de dépôt international: PCT/FR2007/051148
(87) Numéro de publication internationale: WO 2007/135307

(56) Documents cités:
- EP-A1- 0 721 885
- WO-A-95/09743
- GB-A- 1 348 873
- GB-A- 2 323 336
- JP-A- 5 238 296
- US-A- 5 152 578

## Description

L'invention concerne un agencement de siège pour un véhicule automobile.

L'invention concerne plus particulièrement un agencement de siège pour un véhicule automobile comportant un dossier et une assise d'orientation sensiblement longitudinale qui repose sur un plancher du véhicule automobile au moins par l'intermédiaire d'une armature, du type dans lequel le siège comporte un système dit "d'anti sous-marinage actif" escamotable qui est dissimulé dans une partie avant de l'assise sous une revêtement de ladite assise, et qui comporte un élément d'orientation transversale qui est mobile entre une position basse inactive et une position haute active dans laquelle il remonte sensiblement sous une partie avant d'une cuisse d'un occupant du siège, proche de son genou, pour éviter, lorsque le véhicule est soumis à un choc d'orientation longitudinale, qu'un bassin de l'occupant du siège ne glisse sous un brin ventral d'une ceinture de sécurité équipant ledit siège.

On connaît de nombreux exemples d'agencements de siège, comportant des systèmes d'anti sous-marinage qui sont destinés éviter, lorsque le véhicule est soumis à un choc d'orientation longitudinale, qu'un bassin de l'occupant du siège ne glisse sous un brin ventral d'une ceinture de sécurité équipant lendit siège.

Parmi ceux-ci, on distingue les systèmes actifs et les systèmes passifs.

Les systèmes actifs comportent généralement un élément d'orientation transversale qui est actionné par un dispositif pyrotechnique entre sa position basse inactive et sa position haute active agencée sous la partie avant de la cuisse de l'occupant du siège. Ce dispositif pyrotechnique consiste généralement en un coussin gonflable pyrotechnique orienté transversalement, ou en une traverse rigide transversale articulée qui est actionnée par un actionneur pyrotechnique de type vérin pyrotechnique, le coussin pyrotechnique ou le vérin pyrotechnique étant commande électriquement simultanément a l'activation d'un système de prétensionneurs de ceintures de sécurité ou de coussins gonflables de sécurité du véhicule

Le document WO-A-95/09743 correspondant au préambule de la revendication indépendante décrit et représente un système semi-actif constitué d'un agencement de siège pour un véhicule automobile comportant un dossier et une assise d'orientation sensiblement longitudinale qui repose sur un plancher du véhicule automobile au moins par l'intermédiaire d'une armature fixe et d'éléments mobiles, notamment des bielles montées pivotantes par l'intermédiaire de pivots par rapport à l'armature fixe et une barre dont un pion est monté coulissant dans une lumière oblongue de l'armature fixe. Le siège comporte un système d'anti sous-marinage semi-actif escamotable qui est dissimulé dans une partie avant de l'assise sous une revêtement de ladite assise, et qui comporte un élément d'orientation transversale qui est mobile entre une position basse inactive et une position haute active.

L'élément d'orientation transversale du système d'anti sous-marinage est solidaire de la barre et de la bielle dont le déploiement entre sa position basse inactive et sa position haute active est commandé par la force d'inertie du passager, Un tel système est dit semi-actif en ceci qu'il est dépourvu d'éléments pyrotechniques mais est néanmoins mobile entre une position basse inactive et une position haute active.

Cette solution technique, quoique plus économique qu'un agencement comportant des dispositifs pyrotechniques, n'en demeure pas moins onéreuse.

Les systèmes passifs, quant à eux, comportent un bossage dit "d'anti-sous marinage" qui consiste en un élément transversal rigide qui est agencé de manière statique en position haute sous la partie avant de la cuisse de l'occupant du siège.

Pour procurer malgré tout un confort satisfaisant à l'occupant du siège, l'élément transversal rigide doit être disposé sous une quantité suffisante de revêtement en mousse du siège.

De ce fait, un tel système passif est généralement réservé à des sièges comportant une assise placée en position basse par rapport à un plancher du véhicule, tel q'un siège de véhicule de type berline, coupé, ou break pour lequel le genou de l'occupant du siège est placé sensiblement plus haut que son bassin.

En revanche, ce type de système passif est incompatible avec un siège dédié à un véhicule de type monospace ou fourgon pour lequel le genou de l'occupant du siège est placé sensiblement à la même hauteur que son bassin, car l'agencement d'un tel système passif sur un tel type de siège nécessiterait obligatoirement de réduire l'épaisseur de mousse interposée entre l'élément transversal d'anti sous-marinage et la cuisse du conducteur, au risque de rendre alors le siège particulièrement inconfortable.

Ainsi, les systèmes de type passifs présentent l'avantage d'un coût de fabrication réduit, mais ne peuvent être mis en oeuvre dans tout type de véhicule.

L'invention propose de remédier à ces problèmes en proposant un agencement du type décrit précédemment comportant un système d'anti-sous marinage actif purement mélanique est présentant par conséquent un coût de réalisation réduit, apte à être agencé notamment dans un siége d'un véhicule de type monospace ou un véhicule utilitaire de type fourgon.

Dans ce but, l'invention propose un agencement du type décrit précédemment dans WO-A-95/09743 caractérisé en ce que l'élément d'orientation transversale du système d'anti sous-marinage est solidaire d'un ensemble d'organes déployables dont le déploiement entre sa position basse inactive et sa position haute active est commandé par une déformation de l'élément de piétement du siège lors du choc.

Selon d'autres caractéristiques de l'invention qui font l'objet des revendications dépendantes :
- l'ensemble d'organes déployables comporte, de chaque côté transversal de l'armature du siège, aussi nommée élément de piétement une biellette avant et une billette arrière qui comportent chacune une première extrémité supérieure qui est reliée a la première extrémité de l'autre biellette par un premier pivot commun pour former une articulation supérieure, et une seconde extrémité inférieure qui est liée par un second pivot à l'armature du siège, aussi nommée élément de piétement, de manière qu'une déformation en compression longitudinale de l'armature du siège provoque un rapprochement des seconds pivots des biellettes avant et arrière ayant pour conséquence une remontée de l'articulation supérieure de l'ensemble d'organes.
- l'élément d'orientation transversale est constitué d'une traverse qui est fixée transversalement entre deux biellettes à proximité immédiate de l'articulation supérieure de l'ensemble d'organes,
- la traverse est fixée entre les deux biellettes arrière à proximité immédiate de l'articulation supérieure de l'ensemble d'organes,
- l'armature comporte un cadre supérieur, déformable longitudinalement, sur lequel repose l'assise et qui est relié sensiblement à ses quatre coins par des pieds avant et arrière qui reposent sur le plancher du véhicule,
- les extrémités inférieures des pieds arrière de l'armature sont susceptibles, lors d'un choc, de pivoter par rapport au plancher du véhicule et le cadre supérieur comporte au moins deux éléments transversaux rigides avant et arrière reliés par au moins un élément longitudinal déformable et/ou en partie destructible qui est susceptible, lorsque le véhicule est soumis a un choc, de permettre le rapprochement des éléments transversaux rigides sous l'effet du pivotement des pieds arrière de l'armature pour déformer l'armature du siége en compression longitudinale,
- les biellettes avant et arrière sont agencées inférieurement à l'armature et les seconds pivots des biellettes sont fixes aux éléments transversaux rigides avant et arrière du cadre,
- les pieds avant et arrière sont de hauteurs élevées pour proposer une hauteur d'assise associée à un véhicule de type monospace ou fourgon.

D'autres caractéristiques et avantages de l'invention apparaîtront à la lecture de la description déraillée qui suit pour la compréhension de laquelle on se reportera aux dessins annexés dans lesquels :
- la figure 1 est une vue en perspective d'un agencement comportant une armature de siège équipée d'un système anti-sous amarinage selon l'invention ;
- la figure 2 est une vue schématique de côté de l'agencement de la figure 1 dont l'élément d'orientation transversale occupe sa position basse ;
- la figure 3 est une vue schématique de côté de l'agencement de la figure 1 dont l'élément d'orientation transversale occupe sa position haute.

Dans la description qui va suivre, des chiffres de référence identiques désignent des pièces identiques ou ayant des fonctions similaires.

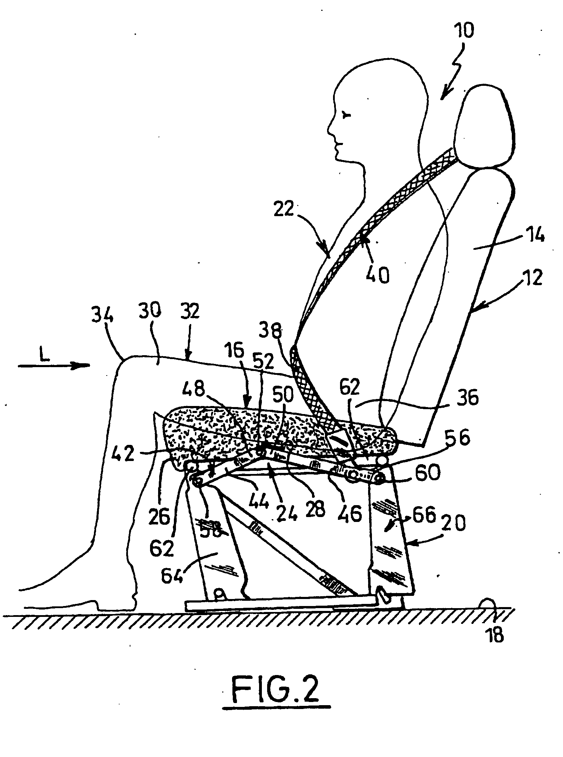

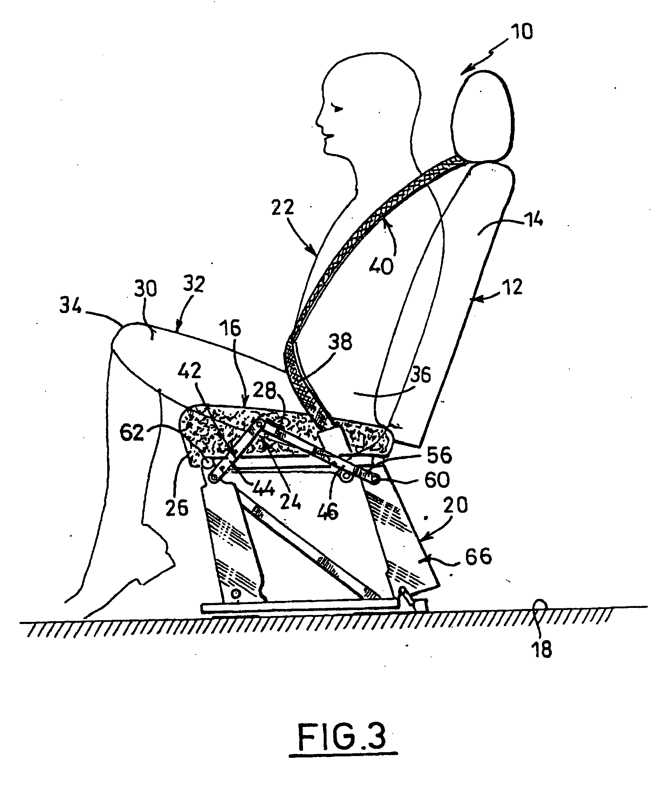

On a représenté sur les figures 2 et 3 un agencement 10 de siège, pour un véhicule automobile réalisé conformément à l'invention.

De manière connue, l'agencement 10 comporte un siège 12 comportant un dossier 14 et une assise 16 d'orientation sensiblement longitudinale qui repose sur un plancher 18 du véhicule automobile au moins par l'intermédiaire d'une armature, aussi nommée élément de piétement 20.

Ce siège 12 est destiné à recevoir un occupant 22 du véhicule. A l'avant de ce siège 12, le plancher du véhicule peut par exemple former une zone de réception des pieds l'occupant du siège.

De manière connue, le siège 12 comporte un système 24 dit "d'anti sous-marinage actif " escamotable qui est dissimulé dans une partie avant de l'assise 16, comme représenté à gauche sur les figures 2 et 3, sous un revêtement 26 de ladite assise 16.

Le revêtement 26 est par exemple constitué d'une mousse synthétique qui est destinée à assurer le confort d'assise de l'occupant 22 du siège.

Le système 24 comporte un élément 28 d'orientation transversale qui est mobile entre une position basse inactive, représentée a la figure 2, et une position haute active, représentée à la figure 3, dans laquelle il remonte sensiblement sous une partie avant 30 d'une cuisse 32 d'un occupant 22 du siège, proche de son genou 34, pour éviter, lorsque le véhicule est soumis à un choc d'orientation longitudinal, représenté par la fléche "L", qu'un bassin 36 de l'occupant 22 du siège 12 ne glisse sous un brin ventral 38 d'une ceinture 40 de sécurité équipant ledit siège 12.

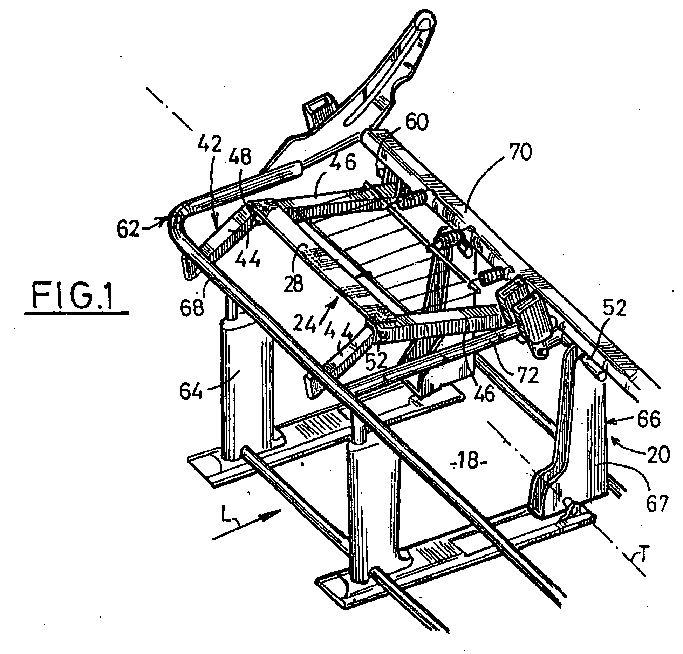

Conformément à l'invention, comme l'illustrent les figures 1 à 3, l'élément 28 d'orientation transversale du système 24 dit "d'anti sous-marinage" est solidaire d'un ensemble 42 d'organes déployables dont le déploiement entre sa position basse inactive et sa position haute active est commandé par une déformation de l'élément de piètement 20 du siège 12 lors du choc.

Plus particulièrement, l'ensemble 42 d'organes déployables comporte, de chaque côté transversal de l'armature 20, une biellette avant 44 et une biellette arrière 46 qui comportent chacune une première extrémité supérieure 48, 50 qui est reliée à la première extrémité 50, 48 de l'autre biellette 44, 46 par un premier pivot 52 commun d'axe "T" pour former une articulation supérieure, et une seconde extrémité inférieure associée 54, 56 qui est liée par un second pivot associé 58, 60 à l'armature du siège, de manière qu'une déformation en compression longitudinale de l'armature 20 du siège 12, comme représenté à la figure 3, provoque un rapprochement des seconds pivots 58, 60 des biellettes avant 44 et arrière 46 ayant pour conséquence une remontée de l'articulation supérieure de l'ensemble 42 d'organes déployables, constituée par le pivot 52.

Avantageusement, et de manière non limitative de l'invention, cet ensemble 42 d'organes déployables est donc susceptible de se déployer à la manière d'un pantographe.

Plus particulièrement, comme l'illustre la figure 1, l'élément 28 d'orientation transversal est constitué d'une traverse qui est fixée transversalement entre deux biellettes à proximité immédiate de l'articulation supérieure 52 de l'ensemble 42 d'organes déployables.

Cette traverse pourrait être agencée entre l'une ou l'autre des paires de biellettes 44, 46.

Toutefois, dans le mode de réalisation préféré de l'invention, afin de garantir un confort maximal à la cuisse 32 de l'occupant 22, du siège, la traverse est fixée entre les deux biellettes arrière 46 à proximité immédiate de l'articulation 52 supérieure de l'ensemble 42 d'organes déployables.

L'élément de piètement 20 peut être de tout type pour convenir à la bonne réalisation de l'invention, pourvu qu'elle soit déformable longitudinalement.

Toutefois, dans le mode de réalisation préféré de l'invention, l'armature comporte un cadre supérieur 62, réformable longitudinalement, sur lequel repose l'assise 16 et qui est relié sensiblement au moins à ses quatre coins par des pieds avant 64 et arrière 66 qui reposent sur le plancher 18 du véhicule.

Comme l'illustre la figure 1, les extrémités inférieures 67 des pieds arrière 66 de l'élément de piétement 20 sont susceptibles, lors d'un choc de pivoter par rapport au plancher 18 du véhicule et le cadre supérieur 62 comporte au moins deux éléments transversaux rigides avant 68 et arrière 70 reliés par au moins une élément 12 longitudinal déformable et/ou en partie destructible.

Par exemple, de manière non limitative de l'invention, l'élément 72 est constitué d'une barre 72 dont une extrémité arrière est articulée sur l'élément 70 transversal rigide arrière par l'intermédiaire d'un pivot destructible (non représenté).

La barre 72 pourrait aussi comporter au moins une zone d'amorce de rupture sans changer la nature de l'invention.

Cet élément transversal 72 est susceptible, lorsque le véhicule est soumis a un choc d'orientation "L", de permettre le rapprochement des éléments 68, 70 transversaux rigides sous l'effet du pivotement des pieds 66 arrière de l'élément de piètement pour déformer globalement l'élément de piètement 20 du siège 12 en compression longitudinale.

Avantageusement, les biellettes avant 42 et arrière 46 sont agencés intérieurement à l'élément de piètement 20 et les seconds pivots 58, 60 des biellettes sont fixés aux éléments 68, 70 transversaux rigides avant et arrière du cadre 62.

De ce fait, en cas de choc d'orientation "L", comme représenté à la figure 3, l'élément de piètement 20 se déforme en se comprimant globalement longitudinalement, le pied arrière 66 pivotant autour du pivot de son extrémité inférieure 67, ce qui a pour conséquence, en rapprochant les pivots 58, 60 des biellettes 44, 46, de provoquer une déformation de l'ensemble 42 d'organes déployables se traduisant par une remontée de son articulation supérieure 52 et donc de la traverse 28.

Il sera compris que l'agencement 10 trouve naturellement à s'appliquer à un siège 12 dont les pieds avant 64 et arrière 66 sont de hauteurs élevées, typiquement de l'ordre de 40 à 50 centimètres, pour proposer une hauteur d'assise 16 associée à un véhicule de type monospace ou fourgon.

L'invention permet donc de dispose d'un siège 12 équipé d'un système 24 d'anti-sous marinage actif purement mécanique et présentant par conséquent un coût de réalisation réduit.

## Revendications

1. Agencement (10) de siège (12) pour un véhicule automobile comportant un dossier (14) et une assise (16) d'orientation sensiblement longitudinale qui repose sur un plancher (18) du véhicule automobile par l'intermédiaire d'un élément de piétement (20), dans lequel le siège (12) comporte un système (24) d'anti sous-marinage actif escamotable qui est dissimulé dans une partie avant de l'assise (16) sous une revêtement (26) de ladite assise (16), et qui comporte un élément (28) d'orientation transversale qui est mobile entre une position basse inactive et une position haute active,
**caractérisé en ce que** l'élément (28) d'orientation transversale du système (24) d'anti sous-marinage est solidaire d'un ensemble (42) d'organes déplorables dont le déploiement entre sa position basse inactive et sa position haute active est commandé par une déformation de l'élément de piétement (20) du siège (12) lors du choc.

2. Agencement (10) de siège selon la revendication précédente, **caractérisé en ce que** l'ensemble (42) d'organes déployables comporte, de chaque côté transversal de l'élément de piètement (20), une biellette avant (44) et une biellette arrière (46) qui comportent chacune une première extrémité supérieure (48, 50) qui est reliée à la première extrémité (50, 48) de l'autre billette (44, 46) par un premier pivot (52) commun pour former une articulation supérieure, et une seconde extrémité inférieure (54, 56) qui est liée par un second pivot (58, 60) à l'élément de pietement (20) du siège, de manière qu'une déformation en compression longitudinale de l'élément de pietement (20) du siège (12) provoque un rapprochement des seconds pivots (58, 60) des biellettes avant (44) et carrière (46) ayant pour conséquence une remontée de l'articulation supérieure (52) de l'ensemble (42) d'organes déployables.

3. Agencement (10) de siège selon la revendication précédents, **caractérisé en ce que** l'élément d'orientation transversale est constitué d'une traverse (28) qui est fixée transversalement entre deux biellettes à proximité immédiate de l'articulation supérieur (52) de l'ensemble (42) d'organes déployables.

4. Agencement (10) selon la revendication précédente, **caractérisé en ce que** la traverse (28) est fixée entre les deux biellettes arrière (46) à proximité immédiate de l'articulation supérieure (52) de l'ensemble (42) d'organes déployables.

5. Agencement (10) selon l'une quelconque des revendications 2 à 4, **caractérisé en ce que** l'élément de piétement (20) comporte un cadre supérieur (62), déformable longitudinalement, sur lequel repose l'assise (16) et qui est relié sensiblement à ses quatre coins par des pieds avant (64) et arrière (66) qui reposent sur le plancher (18) du véhicule.

6. Agencement (10) selon la revendication précédente, **caractérisé en ce que** les extrémités inférieures (67) des pieds arrière (66) de l'élément de piétement (20) sont susceptible, lors d'un choc, de pivoter par rapport au plancher (18) du véhicule et **en ce que** le cadre supérieur (62) comporte au moins deux éléments transversaux rigides avant (68) et arrière (70) reliés par au moins un élément (72) longitudinal déformable et/ou en partie destructible qui est susceptible, lorsque le véhicule est soumis à un choc, de permettre le rapprochement des éléments (68, 70) transversaux rigides sous l'effet du pivotement des pieds arrière (66) de l'armature pour déformer l'élément de piétement (20) du siège (12) en compression longitudinale.

7. Agencement (10) selon l'une quelconque des revendications 5 ou 6, **caractérisé en ce que** les biellettes avant (42) et arrière (46) sont agencées intérieurement à l'élément de piètement (20) et **en ce que** les seconds pivots (58, 60) des biellettes (42, 46) sont fixés aux éléments (68, 70) transversaux rigides avant et arrière du cadre (62).

8. Agencement (10) selon l'une des revendications 5 à 7, **caractérisé en ce que** les pieds avant (64) et arrière (66) sont de hauteurs élevées pour proposer une hauteur d'assise associée à un véhicule de type monospace ou fourgon.

## Claims

1. Seat (12) arrangement (10) for a motor vehicle, comprising a seat back (14) and a seat base (16) of approximately longitudinal orientation resting on a floor (18) of the motor vehicle via an underframe element (20), in which arrangement the seat (12) comprises a retractable active anti-submarining system (24) that is concealed in a forward part of the seat base (16) under a covering (26) of said seat base (16), and that comprises a transversely oriented element (28) that is moveable between an inactive low position and an active high position,
said arrangement being **characterized in that** the transversely oriented element (28) of the anti-submarining system (24) is mounted on a set (42) of deployable members whose deployment, between the inactive low position and the active high position, is caused by a deformation of the underframe element (20) of the seat (12) in a collision.

2. Seat arrangement (10) according to the preceding claim, **characterized in that** the set (42) of deployable members comprises, on each transverse side of the underframe element (20), a forward link (44) and a rear link (46), each having a first or upper end (48, 50) connected to the first end (50, 48) of the other link (44, 46) by a first or common pivot (52) to form an upper hinge, and a second or lower end (54, 56) connected by a second pivot (58, 60) to the underframe element (20) of the seat, in such a way that a longitudinal compressive deformation of the underframe element (20) of the seat (12) shortens the distance between the second pivots (58, 60) of the forward (44) and rear (46) links, causing an upward movement of the upper hinge (52) of the set (42) of deployable members.

3. Seat arrangement (10) according to the preceding claim, **characterized in that** the transversely oriented element is a crossmember (28) fixed transversely between two links in the immediate vicinity of the upper hinge (52) of the set (42) of deployable members.

4. Arrangement (10) according to the preceding claim, **characterized in that** the crossmember (28) is fixed between the two rear links (46) in the immediate vicinity of the upper hinge (52) of the set (42) of deployable members.

5. Arrangement (10) according to any one of Claims 2 to 4, **characterized in that** the underframe element (20) comprises a longitudinally deformable upper frame (62) on which the seat base (16) rests and which is connected approximately at its four corners by front legs (64) and rear legs (66) that rest on the floor (18) of the vehicle.

6. Arrangement (10) according to the preceding claim, **characterized in that** the bottom ends (67) of the rear legs (66) of the underframe element (20) are able in a collision to pivot relative to the floor (18) of the vehicle and **in that** the upper frame (62) comprises at least a forward rigid transverse element (68) and a rear rigid transverse element (70) connected by at least one longitudinal deformable and/or partially destructible element (72) which, when the vehicle is involved in a collision, is capable of allowing the distance between the rigid transverse elements (68, 70) to shorten by the pivoting of the rear legs (66) of the underframe element to deform the underframe element (20) of the seat (12) by longitudinal compression.

7. Arrangement (10) according to either of Claims 5 and 6, **characterized in that** the forward (42) and rear (46) links are located within the underframe element (20) and **in that** the second pivots (58, 60) of the links (42, 46) are fixed to the forward and rear rigid transverse elements (68, 70) of the frame (62).

8. Arrangement (10) according to any one of Claims 5 to 7, **characterized in that** the front (64) and rear (66) legs are tall in order to provide a seat base height associated with a minivan or van type vehicle.

## Patentansprüche

1. Anordnung (10) eines Sitzes (12) für ein Kraftfahrzeug, der eine Rückenlehne (14) und eine Sitzfläche (16) von im Wesentlichen Längsausrichtung aufweist, die über ein Fußgestellelement (20) auf einem Boden (18) des Kraftfahrzeugs ruht, wobei der Sitz (12) ein einziehbares aktives Abtauchverhinderungssystem (24) aufweist, das in einem vorderen Teil der Sitzfläche (16) unter einer Verkleidung (26) der Sitzfläche (16) versteckt ist und ein Element (28) mit Querausrichtung aufweist, das zwischen einer unteren inaktiven Stellung und einer oberen aktiven Stellung beweglich ist,
**dadurch gekennzeichnet, dass** das Element (28) mit Querausrichtung des Abtauchverhinderungssystems (24) fest mit einer Einheit (42) von entfaltbaren Organen verbunden ist, deren Entfaltung zwischen seiner unteren inaktiven Stellung und seiner oberen aktiven Stellung durch eine Verformung des Fußgestellelements (20) des Sitzes (12) beim Aufprall gesteuert wird.

2. Sitzanordnung (10) nach dem vorhergehenden Anspruch, **dadurch gekennzeichnet, dass** die Einheit (42) von entfaltbaren Organen auf jeder Querseite des Fußgestellelements (20) eine vordere Hebelstange (44) und eine hintere Hebelstange (46) aufweist, die je ein erstes oberes Ende (48, 50), das mit dem ersten Ende (50, 48) der anderen Hebelstange (44, 46) über einen ersten gemeinsamen Drehzapfen (52) verbunden ist, um ein oberes Gelenk zu bilden, und ein zweites unteres Ende (54, 56) aufweisen, das über einen zweiten Drehzapfen (58, 60) mit dem Fußgestellelement (20) des Sitzes verbunden ist, damit eine Verformung in Längskomprimierung des Fußgestellelements (20) des Sitzes (12) eine Annäherung der zweiten Drehzapfen (58, 60) der vorderen (44) und hinteren Hebelstangen (46) bewirkt, was ein Hochsteigen des oberen Gelenks (52) der Einheit (42) von entfaltbaren Organen nach sich zieht.

3. Sitzanordnung (10) nach dem vorhergehenden Anspruch, **dadurch gekennzeichnet, dass** das Element mit Querausrichtung aus einem Querträger (28) besteht, der quer zwischen zwei Hebelstangen in direkter Nähe des oberen Gelenks (52) der Einheit (42) von entfaltbaren Organen befestigt ist.

4. Anordnung (10) nach dem vorhergehenden Anspruch, **dadurch gekennzeichnet, dass** der Querträger (28) zwischen den zwei hinteren Hebelstangen (46) in direkter Nähe des oberen Gelenks (52) der Einheit (42) von entfaltbaren Organen befestigt ist.

5. Anordnung (10) nach einem der Ansprüche 2 bis 4, **dadurch gekennzeichnet, dass** das Fußgestellelement (20) einen in Längsrichtung verformbaren oberen Rahmen (62) aufweist, auf dem die Sitzfläche (16) ruht und der im Wesentlichen an seinen vier Ecken durch vordere (64) und hintere Füße (66) verbunden ist, die auf dem Boden (18) des Fahrzeugs ruhen.

6. Anordnung (10) nach dem vorhergehenden Anspruch, **dadurch gekennzeichnet, dass** die unteren Enden (67) der hinteren Füße (66) des Fußgestellelements (20) bei einem Aufprall bezüglich des Bodens (18) des Fahrzeugs schwenken können, und dass der obere Rahmen (62) mindestens zwei steife vordere (68) und hintere Querelemente (70) aufweist, die durch mindestens ein verformbares und/oder teilweise zerstörbares Längselement (72) verbunden sind, dass, wenn das Fahrzeug einen Aufprall erfährt, die Annäherung der steifen Querelemente (68, 70) unter der Wirkung des Schwenkens der hinteren Füße (66) des Gestells erlauben kann, um das Fußgestellelement (20) des Sitzes (12) in Längskomprimierung zu verformen.

7. Anordnung (10) nach einem der Ansprüche 5 oder 6, **dadurch gekennzeichnet, dass** die vordere (42) und hintere Hebelstange (46) innerhalb des Fußgestellelements (20) angeordnet sind, und dass die zweiten Drehzapfen (58, 60) der Hebelstangen (42, 46) an den steifen vorderen und hinteren Querelementen (68, 70) des Rahmens (62) befestigt sind.

8. Anordnung (10) nach einem der Ansprüche 5 bis 7, **dadurch gekennzeichnet, dass** die vorderen (64) und hinteren Füße (66) große Höhen haben, um eine Sitzhöhe anzubieten, die einem Fahrzeug von der Art Mehrzweckfahrzeug oder Kastenwagen zugeordnet ist.
